# EUROPEAN PATENT SPECIFICATION

(11) **EP 1 730 934 B1**
(45) Date of publication and mention of the grant of the patent: **07.05.2008**
(21) Application number: 05716136.6
(22) Date of filing: 15.03.2005
(51) Int. Cl.: H04L 29/08

(54) **DATA DISTRIBUTION SYSTEM AND METHOD**
DATENZUORDNUNGSSYSTEM UND -VERFAHREN
SYSTEME ET PROCEDE DE DISTRIBUTION DE DONNEES

(30) Priority: 16.03.2004 GB 0405873
(43) Date of publication of application: 13.12.2006
(73) Proprietor: Siemens IT Solutions and Services Limited, Frimley Camberley Surrey GU16 8QD (GB)
(72) Inventor: PARR, Ian David, Horsham Sussex (GB); GARFOOT, Robert James, Bracknell Berkshire RG12 0GB (GB); WALKER, Neil, London Greater London W1A 1AA (GB)
(74) Representative: Morgan, Marc
(86) International application number: PCT/EP2005/002823
(87) International publication number: WO 2005/091595

(56) References cited:
- EP-A- 0 715 247
- US-A1- 2003 028 623
- US-A1- 2003 061 287
- US-A1- 2003 084 298
- US-A1- 2003 140 003
- US-A1- 2003 204 602

## Description

The present invention relates to the field of data distribution across multiple network topologies including peer-to-peer networks. The invention relates in particular, but not exclusively, to the distribution of rich media data including audio and video content.

The introduction of faster internet services and the introduction of such services direct to users' homes has led to an increasing demand for delivery of data, in particular media content, over the internet. Access to the data may be provided in a number of ways. For example, content distributors may store the content as data files, for example as media data files, on a central server. Users may request media data files from the central server and the requested data files may be transmitted to the user, for example using data streaming techniques that are well known in the art. Central distribution techniques such as this may provide a reliable way to distribute data to users but, for a large number of requesting users, such systems place a high demand on the central server. In addition, the server requires a large amount of bandwidth to ensure that all user requests can be met quickly and that a number of requests can be met simultaneously. Also, the central server must have fast access to the data content which must me stored centrally on high capacity and potentially expensive hardware equipment.

In addition, such a central distribution model of data distribution does not scale easily. As the amount of data to be distributed increases, the capacity of the central server to distribute or to allow users to access increasing volumes of data must also increase. Similarly, as the number of users requesting download of data from the central server increases, the bandwidth of the connection from the central server must also increase.

An alternative model of data distribution is a peer-to-peer system. In the peer-to-peer system such as US2003/0028623, data is stored by some or all of the user devices, or peers, within the system and each device makes the data available for direct download by the other peers in the network. Membership of the peer-to-peer "system" may be determined by a broadcasting or responding agent on each peer. Such a system does not require a central content server, so does not require a large amount of storage capacity or bandwidth although a central directory server may be provided for the network. However a peer-to-peer system also has a number of disadvantages both for the user and for the content provider.

Since data is exchanged directly between users in a peer-to-peer system, the content distributor or the owner of the copyright in the data in conventional peer-to-peer implementations loses control of the distribution of the data. Once the data is in the peer-to-peer network, it is difficult for the content distributor or copyright owner to ensure that data is distributed only to users who have the right to access the data. Digital Rights Management (DRM) systems may be used to provide some protection for the media data, but providers of valuable content are often reluctant to entrust their data to DRM systems in peer-to-peer networks. Also, many content providers may restrict access to their data by peer-to-peer networks in case the data content suffers unauthorised modification by users in the network.

One method of ensuring the authenticity of the data supplied to a user, at least from a central server, is to sign the data stream with a digital signature. To prevent unauthorised access, encryption may be used. The data stream can then be decoded by the authorised user on receipt for access to the data.

For the user, peer-to-peer networks are often found to be unreliable, for example the data that is available may be incomplete so the user may receive only part of the requested content. Also, the speed of download of the data is limited not only by the bandwidth of the requesting user, but also by the upload bandwidth of the peer from which the user is obtaining the data. This may mean that the data downloads slowly to the user. In addition, since data is made available only by peers of the user, the data downloaded may not be complete or may have been tampered with by users in the network.

Internet Service Providers (ISPs) also encounter problems with distributing data over peer-to-peer networks. In particular, when users peer within a network, they may be located at a large geographical or network topological distance from each other and may not be within the network of the same ISP. This means that all of the data passing between the peers must be transmitted to the servers of the first ISP, transferred to the network of the second ISP and transmitted on to the requesting user. Peers exchanging data, particularly media data, are often exchanging large amounts of data and, in a large peer-to-peer network, the bandwidth of the ISP's network, particularly at the exchange, may be quickly saturated by the users.

Embodiments of the present invention aim to mitigate at least some of the problems with data distribution outlined above.

In one aspect, there is a method of distributing rights-managed media data items to users as recited in claim 1.

Hence the system may allow data to be provided initially by a central system, such as a central server or a central network of servers, such as a network of seeding servers. Once a predetermined number of copies of the data have been provided in the network, the system may then supply data to users by directing users to obtain the data by peering with other users in the network. This may be done by including more peer-to-peer sources of the media data item and fewer sources in the central system in the list of sources compiled for the requesting user. Alternatively, peer-to-peer sources may be given a higher priority in the list of sources than central system sources of the item.

This may advantageously allow throttling-back of the availability of each media data item at the central server or at seed servers. This may free resources, such as the connection bandwidth and disk storage space, on the servers, allowing users to access and download different data. For example, the servers may not have to store, or provide bandwidth for downloading, commonly-requested items. Hence a larger quantity of data content may be made available to users using the present system without necessarily requiring a corresponding increase in the throughput or live storage of the servers or the bandwidth to the servers.

In a simple but highly effective implementation, the peer-to-peer phase may begin for each portion as soon as a single user (references to users imply any suitable user media device) has downloaded a single portion of a single file. Although the seeding phase will normally comprise transferring content positively to a number of strategically located servers, the seeding phase may be transparent from the user perspective by simply providing a list of possible peer-to-peer clients, of which one or more of the "peers" comprises, initially at least, a seeding server. In this way, the transition from seeding to peer-to-peer may be substantially automatic and seamless.

Particularly for media data files, the files may be substantial (several tens of megabytes, often hundreds of megabytes, typically a few gigabytes or tens of gigabytes) and it is preferable to divide them into portions, as described further below. Preferably each download client is arranged to access the portions in a substantially random order. This has the advantage that, once a first user has started to download a media data item, that user will quickly have data portions available for upload. A surprisingly beneficial advantage is that when several users are attempting to download the same substantial piece of content at the same time (a typical case), the download rate experienced by each user may be greater than if each was attempting to access a single server and may in fact be greater than if only a single user was accessing the server. This is because each user who has a portion of content may be able to provide the portions already downloaded to other users, and the "peer" may in fact be topologically closer than the central server. Thus, in the case of multiple requests, each user effectively has several sources able to supply content in parallel, rather than multiple competing requests from a single source.

Preferably the list of sources is refreshed, for example at periodic substantially regular time intervals or following an event (e.g. a complete download of a portion or a number of portions), either on request by a download client or prompted by the server or both. This enables the download process to be optimised as the list of potential peers changes.

Preferably, a large number of different media data items are available for distribution within the system and the items may be at different stages of distribution and penetration within the network. In addition, the seeding phase is preferably not distinct from the peer-to-peer phase and a data item may be provided gradually less by the method of the seeding phase and gradually more by the method of the peer-to-peer phase.

Preferably, the seeding phase comprises seeding the media data items from a central content server to seeding servers connected to the peer-to-peer network at a plurality of points. Hence the media data items may be distributed, in this initial stage, to distributed seeding or staging servers, which may then distribute data to end users. This may decrease the load on the central content server of the system.

In one embodiment, the seeding phase may alternatively or additionally comprise seeding the media data items from the central system, comprising a central content server and/or seeding servers, directly to end-users in the peer-to-peer network.

Hence the seeding phase may allow content to be seeded from the central system into the peer-to-peer network.

Preferably, the step of storing information comprises monitoring the delivery of media data items and storing information in one or more tracker devices.

Preferably, data is seeded on to the peer-to-peer seeding network and the delivery quantity of complete content copies through the peer-to-peer tracker is monitored. Once sufficient complete copies are available in the network, the tracker server list may be modified to encourage users (by reducing the quantity of available seed servers or modifying their location in a server index) to select source content from edge peers (users).

The method may comprise deleting the media data item from the persistent store in the peer-to-peer phase, although it may be retained as a fall-back. The media may be retained in a less critical store during the peer-to-peer phase, e.g. on a lower speed server and may not be cached following a request.

Even in the peer-to-peer phase, requests for media data are initially sent, as requests for directory lookup information, to a central system rather than directly to users within the peer-to-peer network and the central system (which may comprise a single central tracker server or a distributed plurality of tracker servers, for example with different servers supplying information to different sub networks, optionally based on topological or geographical divisions) is able to record and control more closely the distribution of data within the network. Hence arbitration and authorisation may be performed by the central server regardless of where the data originated.

In a preferred embodiment, the seeding phase may comprise supplying the requested media data item to a predetermined number of users. Supplying the data from the central server to a predetermined plurality of users may provide a peering user with a choice of data sources from which to obtain the data and this may provide resilience, in case the data is not available from any particular user.

According to a preferred embodiment, the peer-to-peer phase further comprises the step of supplying the requested data directly to the user if the data is not (readily or sufficiently) available via the peer-to-peer network. If insufficient content is available in the peer-to-peer network, the system, for example via a tracker device, may direct users initially to the seed servers. If the seed servers are at delivery capacity or if the media data item is not available in the peer-to-peer network, the system may further allow the client application to 'fall back' from peer- to-peer delivery to an alternative content distribution mechanism such as HTTP or FTP from the system core. This feature may provide a back-up for the peer-to-peer system, in case the data is not available from users in the peer-to-peer network. For the requesting user, the feature may increase the reliability of the system, since it may ensure that data is obtainable. Fall back is preferably performed on a portion-by-portion basis rather than for a complete file HTTP supports specification of byte ranges of a file which may facilitate this. Although the portions can be obtained simply by "peering" with a server, this may not be the most efficient mechanism for delivering large quantities of data from a single server and so alternative delivery mechanisms may be preferred at times when availability of other peers is limited.

The step of determining the availability of the requested media data item preferably includes determining the availability based on the time-limited availability attribute for the media data item. Hence the distribution of and access to media data outside the predetermined time limit, which may be specified by the content provider, may be prevented.

The time-limited availability attribute may be determined based on the time and/or the date of the release or broadcast of the media data item. This attribute may enable a content provider to restrict distribution or access to media data items after a predetermined time window has passed or allow the early distribution of content in anticipation of a national or large launch with the DRM preventing viewing until the centrally managed release date. This may allow users to pre order broadcast material from the programme guide to allow distribution in a "relaxed" manner. In this way the load on the distribution network may be forecast more accurately in advance of a well publicised popular event, thereby leading to enhanced delivery satisfaction by users. For example, for media data items comprising television programmes, the items may be available for a predetermined time period, for example 2 weeks, after the programme was first broadcast.

At the end of the predetermined time period, the user may be prevented from accessing the media data item or the item may be deleted from the user's computer, preferably by the user on receipt of a prompt from client software for the system. In some implementations, the method may further comprise prompting the user/viewer for renewal of permission to continue to retain and or view the material i.e. some persons may wish to pay extra to retain material for longer than the preset time. This may allow the system to provide a trial period for some marketing use implementations.

The time-limited availability attribute may alternatively or additionally comprise an attribute defining the number of times a user can access or playback the media data item. In addition, the time-limited availability attribute may further define the number of times the item may be copied by the user. Parameters for the time-availability attribute, such as those described above, may be set by the content provider individually for each media data item or for groups of media data items, and/or global parameters may be set by the system operator for all items, or all items of a particular group or type, distributed over the network.

The list of sources of the media data item preferably includes routing information for each source to enable the user to obtain the media data item from each source. Hence, in the peer-to-peer phase, the user may obtain the data directly from any source on the list without the data being transmitted through the central system.

Preferably, the list of sources of the media data item is prioritised based on at least one of:
the estimated topographical distance of the source from the user in the network, preferably estimated based on the respective Internet Protocol addresses of the source and the user;
the network service provider of the user and the source;
the type and/or speed of connection of the source to the peer-to-peer network.

Preferably, the topographical distance comprises the network apparent distance taking account of bandwidth restrictions and reliability of availability of each source and peer.

Preferably, the media data item comprises a plurality of chunks of media data.

Further preferably, in the seeding phase, the step of transmitting the media data item comprises transmitting each chunk of the media data item and, in the peer-to-peer phase, compiling a list of sources of the media data item comprises compiling a list of sources of each chunk of the media data item. Splitting the media data item into chunks and enabling the user to obtain each chunk separately may enable a user to request and download a number of chunks simultaneously and preferably enables the user to download each chunk from a different source.

Preferably, for each chunk of media data, an associated hash value is calculated. Further preferably, the method comprises calculating a hash value for each chunk of media data and writing the hash values into a hash file for the media data item. Preferably, the method further comprises signing the hash file using a digital signature.

Preferably, the method further comprises transmitting the hash file to the user or transmitting data to enable the user to obtain the hash file over the peer-to-peer network.

Preferably, the media data item comprises audio data, video data or both audio and video data, for example, the media data may comprise music, television or radio programmes, or films. In an alternative embodiment, however the data may comprise captioning or scripting events or text-based data, such as an e-book, or the data may comprise program code or part-work material, for example to generate or enable a user to access and/or use a computer game or software application.

Preferably, the user comprises a user device, preferably wherein the user device comprises at least one of: a computer, a personal digital assistant (PDA), a mobile telephone handset, a Wi-Fi device, Bluetooth (TM), a set-top box or other device attached to or incorporated into a television set or a radio, a 3G device. Hence the data may be downloaded to a wide range of user devices for access and viewing by the user. This list of protocols is not exhaustive and alternative or new methods of remote and mobile data connectivity can be incorporated without changing the underlying principle of this invention and within the scope of the present invention.

Preferably the method further comprises determining the type of the user device from which the request for a media data item is received. This may allow the data volume, compression algorithm and/or the format to be adjusted to maintain optimum delivery performance or relative pricing of delivery for different device types or different network providers.

Further preferably, the method comprises selecting a format for the media data item based on the type of the user device determined. This may allow the system to enable the user to access the media data in a format suitable for the user device. For example, data accessed by a mobile telephone device may be of a much lower resolution than data accessed by a computer or a television set-top box. This may enable users to download data more quickly to devices with low bandwidth connections to the network.

In an alternative embodiment, the method may further comprise receiving a user input to specify the type of user device and/or the requested download format.

Preferably, the step of determining the availability of the requested media item comprises determining the availability based on at least one of:
an estimate of the geographical location of the requesting user;
the Internet Protocol (IP) address of the requesting user;
an identifier of the requesting user;
attributes of the requesting user;
the type of the media data.

This may allow content providers to control closely the users to whom the content is distributed. For example, if the media data item comprises a film that has been released in a first region (e.g. the United States) but not in a second region (e.g. Europe), the content provider may restrict the distribution of the film from the present system only to users who are within the first region.

In a further preferred embodiment, the system may make mandatory the contact with the central server prior to each usage experience of or access to a downloaded file. This may be used to indicate to the central server the location (preferably by country) of the user at the time of use and therefore the content provider can ensure that files downloaded in, for example the USA intended only for viewing in the USA, cannot be viewed outside the USA. In some implementations, the permission to view a predetermined number of times may be imparted to the file at time of downloaded and will suffice for the life of the file so, once the file has been obtained, it may be possible to view it in any locality. However, the central server contact feature described above may provide, in some embodiments, the ability to restrict usage location. Authorisation prior to each view may require network connectivity by the user device. Attributes of the requesting user may include authorisation information, including the age of the user, which may allow the controlled distribution of content that includes age restrictions, and billing details for the user, so that content providers may ensure that they distribute chargeable content only to users without checking for authorisation, who can be charged for access to the content. Checking user attributes before distributing content to users may reduce the bandwidth used to distribute content to users unnecessarily. In an alternative embodiment, content may be distributed to users without checking for authorisation, but attributes of the users may be verified or checked before issue of a licence for the user to access the content.

Preferably, the information stored identifying the user may include:
the type of user device;
the type and/or speed of the connection from the user to the peer-to-peer network;
the format of the media data item transmitted to the user.

This may allow subsequent users to be directed to peer only to users who downloaded the data in the same format as required by the requesting user and only to users who have a connection to the network suitable for peering to allow the fast upload of the media data item.

In a preferred embodiment, the method further comprises receiving and storing availability information from users in the peer-to-peer network, wherein the availability information indicates the availability of users to peer to other users in the network. Availability information may be sent automatically by user devices to the central system, for example whenever the user device is connected to its network service provider, such as an ISP.

Preferably, the method further comprises receiving additional data for the media data items stored by users in the network. The additional data may include information such as: an identifier of each media data item stored, the time and/or date of download of the media data item by the user, hash values for each chunk comprising the media data item, the time and/or date of access by the user to the media data item.

The additional data may include metadata for the media data item.

In one embodiment, the user availability information and/or the additional data for the media data items may be stored on a tracker device associated with the user. Preferably, one tracker device receives and stores data from a plurality of users in a section of the peer-to-peer network, for example a plurality of users who access the network via the same network service provider. A plurality of interconnected tracker devices may be used to receive and store data from the users in the peer-to-peer network.

Preferably, the tracker devices maintain a source list for the media data items. Further preferably, the tracker devices dynamically modify the source list based on feedback metrics obtained from the peer-to-peer system. Preferably the method further comprises verifying the authenticity of media data items stored within the peer-to-peer network.

In one embodiment, the method further comprises generating reporting data from the information received from the users. The reporting data may include reporting data generated for each user, for example the number of download requests made by the user, the proportion of time that the user is available for peering to other users, the type of the user device of the users and the type of the connection from the user to the peer-to-peer network. The reporting data may further include reporting data generated for each media data item, for example, the number of requests received for the download of each media data item and/or the number of successful downloads performed for each media data item. The reporting data may further include data such as the DRM licence acquisition, which may be broken down, for example, by geographic location.

If the data received from the users is stored in a plurality of tracker devices, the tracker devices may each generate the reporting data individually or the tracker devices may exchange information to allow the reporting data to be generated by the system as a whole from the data received by all of the tracker devices.

Preferably the method further comprises verifying the authenticity of media data items transmitted within the peer-to-peer network. This may be done by transmitting a verification file to each user with the source information for the media data item.

The method may further comprise verifying the authenticity of media data items stored on user devices and/or verifying the authenticity of media data items accessed by user devices. Preferably, verification is performed using the methods described herein of verifying a digital signature for a file containing hash values for chunks of media data and verifying the hash values for each chunk of media data.

In a preferred embodiment, the media data item, or each chunk of media data, further comprises a digitally signed chunk of data embedded in the header. This chunk of data may be verified after download, but before playback of the media data item.

According to a related aspect, there is provided a method of obtaining a rights-managed media data item wherein the media data item has associated rights information, including a time-limited availability attribute, the method comprising:
in a peer-to-peer network, comprising a plurality of user devices and a central system, requesting the media data item from the central system;
receiving details of at least one source of the requested media data item, wherein the at least one source comprises a source in the central system and/or a list of sources in the peer-to-peer network;
if the details of the at least one source comprises a list of sources in the peer-to-peer network, establishing a peer-to-peer connection to a source of the requested media data item selected from the list of sources;
if the source is in the central system, establishing a connection to the central system;
receiving the requested media data item via the peer-to-peer connection or the connection to the central system.

In a preferred embodiment, the central system comprises a plurality of interconnected seeding servers and wherein establishing a connection to the central system comprises establishing a connection to a seeding server. Seeding servers in the central system may be distributed throughout the peer-to-peer network and are preferably part of the peer-to-peer network and users may connect to and receive data from a seeding server that is close to the user in the network. A central server may further be provided in the central system, which may be connected to the distributed network of seeding servers and which may upload data to the seeding servers, either as a result of a request from a user, or whenever the data become available. Using a distributed network of seeding servers to receive user requests and to distribute some of the data, at least initially, into the peer-to-peer network may decrease the load on the central server.

In a preferred embodiment, the media data item comprises a plurality of chunks of media data. Hence source information may be received for each chunk of media data and connections may be established to the peer-to-peer network or to the central system for each chunk of media data.

Preferably, the method further comprises verifying the authenticity of the media data item. Further preferably, verifying the authenticity comprises verifying at least one digital signature associated with the media data item.

In one embodiment, the media data item may comprise a plurality of chunks of media data and, preferably, each chunk of media data may have an associated hash value. Each media data item may further comprise a hash file, which may include the hash values for all of the chunks of media data making up the media data item. The hash file may have an associated digital signature. Verifying the authenticity of the media data item may then comprise verifying the digital signature associated with the hash file and then verifying the hash values of each of the chunks of media data against the hash values stored in the hash file. This may ensure that the media data originates from the content provider and that the data has not been changed since its original transmission by the central system.

Preferably, the list of sources received is prioritised by the central system, preferably based on the estimated topographical distance of the source from the user in the network and/or the respective network service providers of the user and the source.

Preferably the details of at least one source are obtained from a tracker device in the central system.

Using the central system to provide a list of sources may allow the system to ensure that the suggested sources are viable for the user to connect to to obtain the file. The central system is preferably able to filter and prioritise the users in the list according to predetermined rules. Further, the central system preferably accepts content for delivery by peer-to-peer users only after verifying the authenticity of the data content. The authenticity may be verified by checking a digital signature associated with the data content, for example a digital signature associated with a hash file for the content, against a digital signature stored by the content provider.

Preferably, the source of the media data item is selected from the list of sources by the client device of the requesting user. Hence, the central system may provide a list of sources from which the user, or preferably software provided on the user device, selects a source from which to obtain the data. This may allow the central system to maintain overall control of data distribution in the peer-to-peer network, but provide some flexibility for the user to have a number of sources from which to download the data.

In a preferred embodiment, the method further comprises providing an interface to enable a user to access the received media data item. The interface may comprise software provided on the user device. In addition to downloading data, the interface may comprise means for uploading information on quality of service experienced by a user or download times, either specific to a user or de-personalised; this feature may be independently provided.

Preferably, prior to enabling the user to access the received media data item, the method comprises verifying the authenticity of the media data item. Hence the authenticity of the media data item may be verified either or both upon receipt of the media data item by the user and before access of the media data item by the user. This may ensure that the media data item has not been changed or corrupted between download of the media data item by the user and access to the media data item.

Preferably, the method further comprises preventing download of the media data item or access to the media data item by the user if the authenticity of the media data item is not correctly verified. Hence access to unauthorised or unverified data via the present system, for example via a user interface, may be prevented.

A method of deriving digital rights management data for media data comprising:
receiving media data having associated rights information metadata;
extracting the metadata from the media data;
parsing the metadata to derive digital rights management data for the media data, including determining a time-limited availability attribute for the media data;
providing access to the digital rights management data for a media data distribution system.

Preferably, the method further comprises managing the distribution and availability of the media data in the peer-to-peer network based on the digital rights management data determined.

The time-limited availability attribute may be derived, for example, based on the time and/or date of the first release or broadcast of the data, or based on fixed time limits specified by the content provider.

In a preferred embodiment, the metadata includes at least one of:
the date and/or time of first broadcast of the media data;
the type of the media data;
the geographical region of the broadcast of the media data.

The rights to access and distribution of the media data may therefore be managed according to this metadata.

According to a preferred embodiment, deriving the digital rights management data includes deriving a geographically-limited availability attribute for the media data. This may enable the content provider to restrict the geographical distribution of the media data.

In one embodiment, managing the distribution and availability of the media data includes determining metadata for a user requesting the media data and determining the availability of the media data to the user based on the metadata for the user and the digital rights management data determined for the media data.

Preferably, the metadata for the user includes a geographical location attribute for the user.

Further preferably, the geographical location attribute is determined based on the Internet Protocol (IP) address of the user. The geographical location attribute for the user may comprise the country of the user and, in some embodiments, a region for the user within the country.

Preferably rights management is effected by supplying a licence containing playback conditions and decryption keys to enable decryption of encrypted content. Preferably supplying the licence comprises performing a check on a condition, for example user region, subscription information, prior to licence issue. Licences will usually be issued after content download, prior to playback but may be issued in advance of download.

A further aspect provides a method of distributing validated data in a network comprising:
dividing the data into a plurality of data chunks;
deriving a hash value for each data chunk;
writing the hash values of each data chunk into a hash file for the data;
digitally signing the hash file;
providing access to the data chunks to at least one user in the network;
distributing the signed hash file to the at least one user in the network.

A related aspect provides a method of retrieving and verifying data obtained in a network, wherein the data is divided into chunks of data, the method comprising:
obtaining a hash file for the data having an associated digital signature, wherein the
hash file contains a hash value for each of the chunks of data;
obtaining chunks of data, each chunk of data having an associated hash value;
verifying the authenticity of the digitally signed hash file;
verifying the authenticity of each of the chunks of data using the hash values in the hash file.

To ensure the authenticity of data downloaded in a network, a content provider may, as outlined above, encrypt the data stream as it is transmitted to the user. The user may then use a public/private key mechanism to decode the data before it is accessed. The media data of the present system may in particular be encrypted by the DRM system. Encrypted content may be decrypted by the system on playback and on receipt of valid decryption keys in the acquired DRM licence.

Simply determining a hash value for each data item or chunk of data, however, may not provide the data provider with confidence that the data will not be changed and distributed by the user in an amended or corrupted form.

The method described herein, wherein a hash value is determined for each data chunk and the hash values are stored in a signed hash file may advantageously allow the data to be transmitted to users without requiring large amounts of processing to ensure the integrity of the data. Since the content provider may store a copy of the hash file, the method may also allow a user or the content provider to ensure at any time that any media data item or any chunk of a media data item has not been altered since it was distributed by the content provider. Secure transmission of the data may further be provided by encryption provided by a DRM system.

In a preferred embodiment, obtaining chunks of data comprises obtaining chunks of data from a plurality of data sources. For example, data may be obtained from a server of the content provider or from one or more peers in a peer-to-peer network.

In a preferred embodiment, the step of verifying the authenticity of each of the chunks of data is performed on receipt of the chunks of data by the user.

In one embodiment, the network is a peer-to-peer network. In this case, chunks of data may be obtained from a central system or may be obtained from one or more peers in the network. The hash file may also be obtained either from a central system or from a peer in the network. According to a highly preferred embodiment, the hash file is obtained from a central system. This may enable the central system to ensure further that the hash file is not corrupted or tampered with and hence ensure that the chunks of data obtained by the user each have the correct and unaltered hash value.

In one embodiment, the data comprises media data, preferably digital-rights managed media data. The method may be particularly advantageous in a media data distribution system, since distribution of media data often requires the distribution of large amounts of data.

In a preferred embodiment, the hash value comprises a hash value of at least 128bits. A hash value with a large number of bits may increase the security of the data and make it more difficult for users to change the data chunks without also changing the hash value of the chunk. Larger hash values e.g. of 256bits or greater may also be used. Hash values with fewer bits, for example 64 bits or even 32 bits or fewer may also be used in some systems.

A further aspect provides a method of distributing rights-managed media data items in a peer-to-peer network comprising:
receiving a request for a media data item at a central system from a user in the peer-to-peer network;
deriving a list of sources of the media data item in the peer-to-peer network;
determining the relative priorities of the sources of the media data item in the list based on the network service provider of the requester and the network service provider of the or each source;
supplying the list of sources of the media data item and the routing information to the requesting user.

Hence the method may allow, for example, peers within a network to obtain data preferentially from other peers connected to the same Internet Service Provider (ISP). This may enable users to obtain data more quickly and may reduce the cost to the ISP of providing the bandwidth to enable the peer-to-peer transfer of data. For example, the ISP will not have to use ISP network interconnection bandwidth or incur charges for network interconnection if the peers are both within its own ISP network.

Preferably, the method further comprises deriving routing information for each of the sources in the media data item and determining the relative priorities based on the routing information derived.

In one embodiment, the network service provider of the user or the source is determined based on the IP address of the user or the source.

Preferably, the sources of the media data item in the list are further ordered based on the relative geographic distribution of the requesting user and the sources of the media data.

According to a further aspect, there is provided a method of obtaining a digital rights managed media data item over a peer-to-peer network comprising:
requesting the media data item from a central system;
receiving source information for the media data item from the central system, wherein the source information identifies users within the peer-to-peer network from whom the media data item may be obtained via a peering connection;
receiving user input to specify a download time for obtaining the media data item;
at the specified download time, establishing a peering connection with a user based on the received source information and downloading at least a portion of the media data item from the user.

Hence download of media data over the peer-to-peer network may be scheduled by a user in advance. This may allow users to download data at a time when they are not otherwise using their network connection.

The specified download time may be the time at which the user requests data to be provided but, preferably, the system can set a predetermined delayed download time for the data if the data is not immediately available. For example, the user may request immediate download of the data, but the central system may not release the data to the users or, preferably even to the seed servers, until a predetermined scheduled time. The time for populating the seed servers and/or releasing data to users may be set according to schedule contained, for example in the ingest metadata (e.g. a "broadcast time" parameter). This may allow a user to chose to download a media data item that is not yet available, and allow download of the item to commence as soon as it is available.

Further aspects and preferred features are set out in the claims and below. The invention also provides apparatus and computer programs or computer program products, either in the central system or at the user device, for carrying out any method described herein. Preferred features of each aspect or embodiment may be used in combination with preferred or basic features of the same or other aspects and embodiments unless otherwise stated. In particular, where features are described in the content of the supply of data (e.g. a server), a corresponding feature may be provided in the context of the receipt of data (e.g. a download client) and vice versa.

Embodiments of the invention will now be described in more detail with reference to the figures in which:
Fig. 1 is a schematic diagram of a high-level functional overview of an embodiment of a system;
Fig. 2 is a schematic diagram of a distribution network in which an embodiment may be implemented;
Fig. 3 illustrates one embodiment of a verification system;
Fig. 4 is a schematic diagram of a further embodiment of a content distribution system.

The systems and methods described herein may be used to distribute media data or may be used to distribute other types of data, particularly when the data is arranged into discrete data files. Media data may include audio and/or video data and may include text-based and/or image-based data, for example the systems and methods described herein may be used to distribute content such as television or radio programmes, films in video or DVD format, music and e-books.

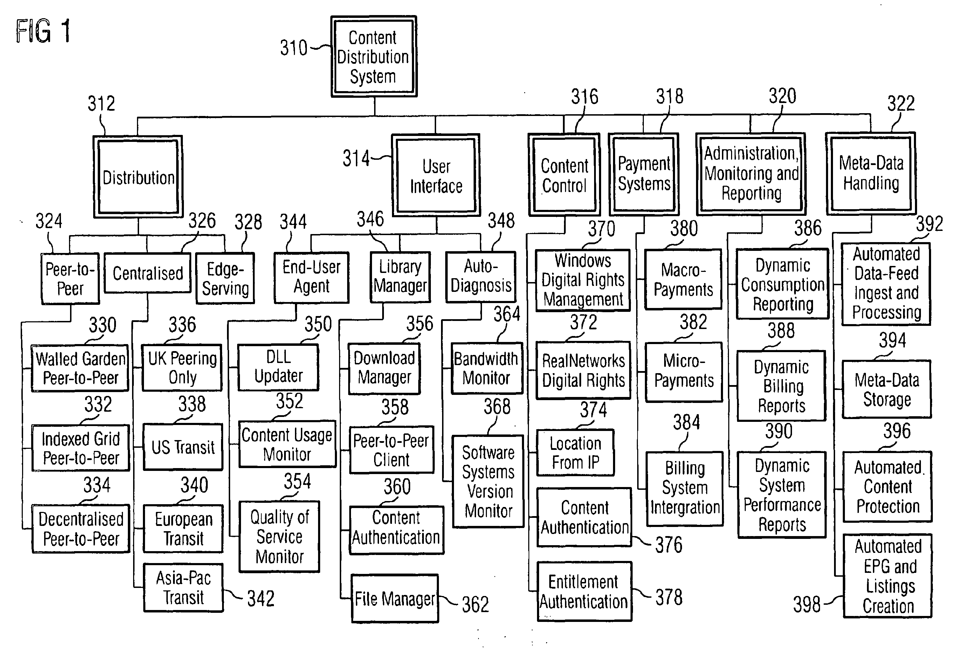

A high-level overview of components of one embodiment of an implementation of the system will now be described with reference to Fig. 1. The content distribution system 310 of the present embodiment comprises 6 main components: distribution 312, a user interface 314, content control 316, payment systems 318, administration, reporting and monitoring 320 and meta-data handling 322.

In some embodiments, not all of the elements listed above may be provided, or elements may be provided separately from the main content distribution system, for example by a third party. Alternatively, elements may be combined and integrated with each other.

The distribution part 312 of the present system comprises a number of different distribution mechanisms, embodiments of which are described in more detail below. The distribution part 312 preferably includes a peer-to-peer distribution element 324, a centralised distribution element 326 and an edge-serving distribution element 328. The peer-to-peer distribution element 324 may incorporate a number of different peer-to-peer mechanisms and the mechanisms provided may depend on the system implemented, but may include: walled garden peer-to-peer 330, indexed grid peer-to-peer 332 and/or de-centralised peer-to-peer 334. The centralised distribution element 326 may similarly comprise a number of components, for example based on geographical location, for example the components may include components for UK peering 336, US transit 338, European transit 340 and Asia-Pacific transit 342.

A further part of the present embodiment of the system is preferably the user interface 314. The user interface component 314 may be divided further into a number of functional components, such as an end-user agent 344, a library manager 346 and an auto-diagnosis component 348. Functions of the end-user agent may include updating the application, including the Dynamic Link Library 350, monitoring and recording the usage of content by the user 352 and monitoring the quality of service provided to the user 354. The content and quality of service monitors 352, 354 may report to other components in the network for data gathering and statistical analysis.

The library manager 356 of the user interface 314 may manage the library of downloaded media data files. A download manager 356 may be provided to control and manage the download of files and a peer-to-peer client 358 may be implemented to manage peering connections with other users in the network. A content authentication component 360 may be provided to authenticate the media data content on download, transmission or playout of the content, as described in more detail below. In addition, a file manager 362 may manage the files stored on the user interface 314.

Auto-diagnosis tools 348 may further be provided in the user interface 314. For example a bandwidth monitor, to monitor and, optionally, record bandwidth usage by the user. A software systems version monitor may further be provided 368.

A content control part 316 of the content distribution system 310 is preferably further provided. The content control part 316 may comprise components such as digital rights management systems 370, 372 which may be developed as part of the present system or which may be provided by third parties. Also, location components 374 to enable the system 310 to determine the geographic location of users, for example based on a user's IP address, may be provided. A content authentication component 376 may further be provided, which may interface with the content authentication component 360 on the user interface 314. An entitlement authentication component 378 may further be provided to enable the system to ensure that a user is entitled to access the requested data.

A further, optional component of the content distribution system 310 may be a payment system component 318. The payment system 318 may enable macro-payments 380 or micro-payments 382 to be made by a user and may further comprise a billing system integration component 384, which may interface the system with third party billing systems.

The system may further be provided with an administration, monitoring and reporting component 320. This component preferably obtains data from other components within the system, such as the distribution component 312 and the user interface 314 to generate dynamic reports relating to system usage and data access. For example, the component may be provided with a dynamic consumption reporting part 386 and may have parts to generate dynamic billing reports 388 and/or dynamic system performance reports 390.

A further component of the content distribution system 310 may be the metadata handling component 322. This may include an automated data-feed ingest and processing component 392, which may be used to automatically generate metadata for data content as it is entered into the system. Metadata storage 394 and automated content protection 398 may further be provided. The metadata handling component 322 may further be used to automatically generate Electronic Programme Guides (EPG) and listings 398. This feature may allow a user to determine the data content that is available on the content distribution system 310.

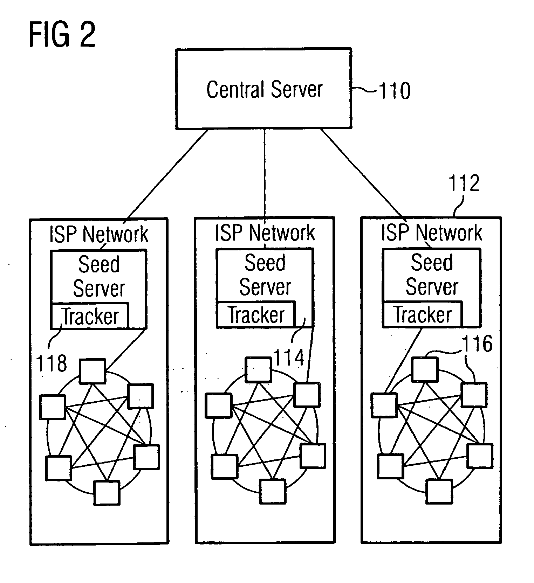

One embodiment of a distribution system and method will now be described in more detail with reference to Fig. 2. According to one embodiment, a central server is provided 110 which stores data to be made available to users 116. The users 116 are preferably interconnected and connected to the wider internet via their internet service provider's (ISP) network 112. The ISP's network 112 allows data to pass between the users and to and from the wider internet, for example to users on other ISP's networks, via the ISP's network servers. According to a preferable embodiment, one or more seed servers 114 may be provided between the central server and the users 116, preferably, one seed server 114 may be provided in the network of each ISP 112. In one embodiment, seed servers 114 may be provided in ISP networks 112 that have more than a predetermined number of users 116. Users in other ISP networks may use the central server 110 in place of the seed server 114 or may use the functionality of a seed server 114 in another ISP's network.

Media data that is available for distribution may be stored in the central server 110. Optionally, some of the media data may be downloaded directly to the seed servers 114. For example media data that is expected to be in high demand may be transmitted to the seed servers 114 directly on its release, whereas media data that is expected to be less popular may be stored in the central server 110 until it is requested by a user 116.

To download data, the user 116 preferably accesses a list of available media data items, for example an Electronic Programme Guide (EPG) which is preferably generated by the central server 110 and accessed at the central server 110, at the seed servers 114 or, preferably via an edge cache in the ISP network. The user 116 selects a media item and the media item may then be delivered to the user 116 in one of a number of ways.

The media item may be delivered directly to the user 116 from the central server by file transfer (for example, HTTP or FTP) to the user 116. Alternatively, the media item may be provided to the user 116 from a seed server 114, preferably a seed server 114 in the same ISP network as the user 116. The media item may be transferred from the seed server 114 to the user 116. However, preferably, the media item to be delivered may be divided into a number of chunks and each separate chunk may be downloaded by the user 116. These chunks may then be reconstructed by client software on the user interface to form the requested media data. To increase the speed of distribution of media data, particularly popular media data, into the peer-to-peer network, seed servers 114 may download data from the central server that has not been requested by users. In this way, the data may be made accessible to users more quickly when it is requested.

It may be possible to download media data to users without users requesting the data. This may enable new data to be distributed within the peer-to-peer system more quickly. However, users may not wish to have unrequested data downloaded to their devices. In addition, safeguards would have to be put in place to ensure that the automatically-downloading system was not used to distribute virus or undesirable content throughout the peer-to-peer network.

Each seed server 114 preferably includes a tracker component 118 which monitors and records the download of media data. In the present embodiment, the tracker components 118 are provided in conjunction with the seed servers 114 but, alternatively, a single central tracker component may be provided which serves some or all of the seed servers or a tracker component may be provided as separate component in each ISP network serving one or more seed servers 114.

In one embodiment, the tracker 118 preferably records each request for a media file and each successful complete download of a media file from the central server 110 or the seed servers 114. Alternatively, the tracker 118 may record the download of each chunk of media data. The tracker 118 preferably records an identifier of the requesting user 116 and an identifier of the media data downloaded. Additionally, the tracker 118 may record information such as the type of the user device, the type and/or speed of connection to the user device, the geographical or network location of the user device, the date of download of the media data and any payment details for the user. (However, in the present system, payment details are preferably recorded by components in the payment system 318 section described in more detail below.)

The type of the user device and the speed and type of connection may be determined or diagnosed automatically by the system or may be determined from information supplied by the user. The data type and quality or data resolution supplied to the user may be varied depending on the type of the user device and its speed of connection to the network. For example, a low-quality version of the media data may be supplied to a user device that is a mobile telephone but a high-quality version of the data may be supplied to a set-top box or a computer.

From the information stored in the tracker device(s) 118, the network, preferably each tracker device 118, may be able to determine how many copies of the media data have been distributed into the network as a whole or into the network of each ISP 112. As the media data becomes more widely distributed in the network, the system starts to use peer-to-peer mechanisms for further distribution of the media data. The system may start to user peer-to-peer mechanisms as soon as possible after release of the media data to the network.

In the present embodiment, peer-to-peer distribution of media data may be provided as set out below. A user may request the media data and the central server 110 may use data obtained from one or more trackers 118 to determine how many copies of the media data have already been supplied to the network. If more than a predetermined number of copies have been distributed, the central server 110 preferably directs the user to obtain the media data using a peer-to-peer method.

Using the peer-to-peer method, the central server 110 uses the data received from the trackers 118 to determine a list of other users 116 to whom the media data has been downloaded. This list of users may be compiled and prioritised by a tracker 118 or the central server 110, in part, based on factors such as the geographic or network location of each user relative to the requesting user and the type and speed of connection of each user device. The list of users is preferably transmitted to the requesting user's user device and the user from whom the media data is obtained may be selected manually by the requesting user or, preferably, may be determined automatically by client software on the receiving user's device.

As discussed above, the media data is preferably not provided as a single large file but is divided into chunks of media data. In the present embodiment, therefore, the seed server provides a list of possible peers for each chunk and client software on the requesting user's user device determines which peer from which to download each chunk.

The dividing of media data into chunks may be performed by the central server 110 or may be performed by the seed servers 114, but the system preferably ensures that each item of media data is split into chunks in the same way throughout the whole system. The chunk size may vary widely, for example depending on the overall size of the media data file the quality of the encoding and the coder/decoder used. For a media data file of around 100 to 200 Mbytes, a typical size for a chunk of media data may be around 256kbytes, therefore there may be around 500 chunks per media data file.

A media data file of around 100 to 200 Mbytes may, for example, comprise video and audio data to allow a user to watch a television programme of around half an hour. Larger media data files may contain longer programmes or films, for example films in DVD format. The chunk size for such larger media data files is preferably adapted to be larger than the chunks for smaller media data files.

The data chunks making up the media file are preferably downloaded by the user in a random order. The download order for the chunks may be determined by client software on the user device. In an alternative embodiment, the chunks of the data file may be downloaded sequentially but this may lead to the problem that many users in the network may have the first chunks of a media data item, but few users may have the final chunks.

As described above, the user device is provided with a list of peers from which it may select a download source for each chunk. The list of peers is preferably prioritised according to the network topology of the source peer with regard to the requesting user. That is, priority is preferably given to peers on same ISP network or to users using the same DOIP (Dial Other Internet Provider) server. This may increase the speed of download of the chunk of data to the user and may simplify the transmission of data, since the data is not required to pass between the networks of different ISPs. For the ISPs, this may decrease the cost of delivering the chunk of media data to the user and may enable the ISP to provide a more efficient and cost-effective peer-to-peer solution. Preferably, the servers in the central system generate a prioritised list of peers from whom the media data chunks are available. Preferably, client software on the user device then selects peers from which to download each chunk of media data.

The network topology of the requesting user relative to each of the source peers may be determined by determining which tracker each user is associated with or connected to. Users connected to the same tracker will generally be part of the same ISP network and so are likely to be closer to each other in the network topology than users that are connected to different trackers.

Further information about the geographical and network distribution of users, which may be used to prioritise the list of peers further may be obtained from systems that determine the geographical location of a user, for example using the Internet Protocol (IP) address of the user. There are available commercial examples of suitable systems which may be used in conjunction with the systems and methods described herein.

In some ISP networks, if the requesting user and the selected source are both in the same network, the media data may be routed intelligently directly from the source to the user without passing through the main servers of the ISP, for example by using intelligent routing of the ATM/ MPLS packets. However, in some networks, it may be necessary to send the data via the main servers of the network.

In order to maintain an up-to-date list of the contents of each peer in the system, client software on the user device is preferably arranged to provide details of the available files on the user device regularly to the tracker. Preferably, details of the available files are provided each time the user device becomes available for peering and details may be provided at regular intervals whilst the user device remains available. Information about the contents of each peer in the system may be exchanged between tracker devices.

Users' devices are preferably also configured to confirm to their associated tracker devices when they become available for peering with other users. The tracker devices may store information for each user device to indicate the proportion of the time that the user is available for peering. This may enable the system to prevent users taking advantage of the peering system by downloading data files from other peers but never being available themselves to allow others to download data files from them. In an alternative embodiment, this may be enforced by software or the client device.

Content providers may use the system described above to distribute media content to requesting users. For example, broadcasters, such as television or radio broadcasters, may use the system to enable users to download programmes, for example recently broadcast programmes. In an alternative embodiment, the system may be used to enable users to download and, in some cases, pay for media content, such as films or music tracks or videos. In some implementations, content providers may enable users to download free content and provide the user with the option of purchasing further similar content. For example, a user may be able to download a low-quality version of the content for free and may then have an option to purchase a high-quality version of the data. Alternatively, a user may be able to download extracts from the media content or, for example, a pilot episode or a single episode of a series of programmes or a single song from an album of music. The user may then pay to download further related media content, such as the full version of a programme or film.

In one embodiment, advertisements may be added to the media content and downloaded to the user device so that the advertisements may be viewed when the media content is accessed. In preferred embodiments, the system further comprises content validation and rights management capabilities.

Digital Rights Management (DRM) functionality may allow the system to control access to copyright material. Access to media data may be limited geographically, for example a film that has been released in the United States may be made available over the system only in the United States. Access to media data may further be limited temporally, for example, television or radio programmes that have been broadcast may be available for download and viewing only for a limited time, e.g. for seven days, after they were first broadcast. The digital rights management may prevent the download of and/or the access to restricted or prohibited data. The media data is preferably encrypted and the DRM information is preferably downloaded with the decryption keys in the form of a license. This is preferably done separately from the media download at the time of first view. However, the licence may be supplied with the media or prior to content download.

The DRM data for the media data may specify time-limited availability for the media data, including both a time before which and a time after which the media data is not available for access by users. This time-limited availability functionality may enable a content provider to distribute media data within the network before the media data is made available for access. That is, users may download the data for storage on their user devices and may access the data only after its date of release by the content provider. The DRM data may alternatively or additionally specify other rights such as play count and playback device security levels.

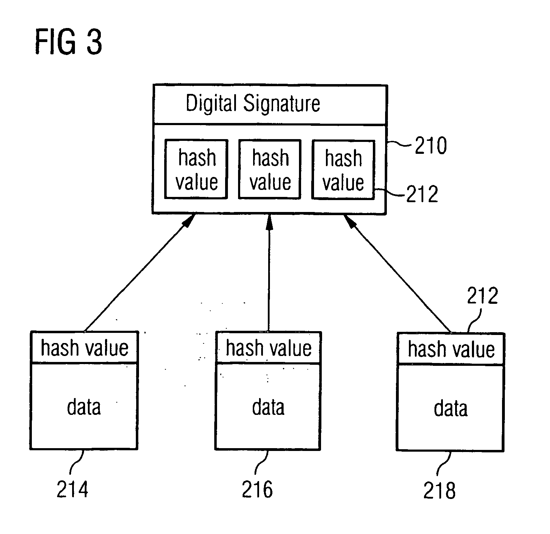

In addition to Digital Rights Management, verification of the data may be provided. This aspect may be implemented in a number of ways and variations to the system below may be provided. One embodiment of a verification system is illustrated schematically in Fig. 3. In this embodiment, the media data is divided into chunks 214, 216, 218 and a hash value 212 is derived for each chunk of media data using a hashing algorithm. The hash values 212 for each of the data chunks 214, 216, 218 are written into a hash file 210 and the hash file 210 is then digitally signed by the data provider.

When a user requests data, the hash file 210 is provided to the user together with the data chunks 214, 216, 218. The user uses the digital signature on the hash file 210 to verify the authenticity of the data, for example, using a public/private key mechanism, and accesses the expected hash values of each of the chunks of data. The user then verifies the hash values of each of the chunks of data against the expected hash values and hence verifies that the contents of the data chunks has not been altered.

The hashing algorithm used to determine a hash value for each of the data chunks is preferably a complex hashing algorithm. In theory, if the hashing algorithm used was very simple, it may be possible to exchange a data chunk for different data chunk which produced the same hash value when the hashing algorithm was applied. However, if a complex hashing algorithm is used, it is very difficult to replace a data chunk with another data chunk that produces the same hash value. In the present embodiment, each hash value preferably comprises 128bits, however longer or shorter hash values may be used depending on, for example, the level of security required and the size of the data chunks. Hence the method described above may allow a content provider to ensure that the data distributed has not been altered.

The verification method described above is preferably used each time data is transferred within the network, either within the peer-to-peer network, or when data is downloaded directly from the central server or from a seed server. The hash file is preferably downloaded from the central server or a seed server when the data is requested by the user. The centrally-obtained hash file may then be used to verify the identity of the data chunks obtained from peers in the network.

In addition to verifying the authenticity of the hash file when the data is downloaded by the user, the hash file is preferably used to verify the data before playout of the data by the user. This verification of the data before playout may be implemented by software on the client device. Alternatively or additionally, the file may be pre-authenticated after download and tagged as authentic in the library. Before playout, a further authentication mechanism may be used comprising checking signed data in the header of the media data item. As outlined above, the system may further provide administration, monitoring and reporting functionality. Hence the system may generate real-time, or almost real-time usage and ratings statistics for parts of the network and for specified media data content. For example, the system may generate reports detailing how many times one or more items of media data have been requested and downloaded by users and such data may be broken down, for example, by the geographical location of the users, or by the time and date that the content was downloaded or accessed.

In a system in which users pay for the download of some or all of the media data, the administration functionality of the system may further provide payment records and may perform statistical analysis of the records.

In one embodiment, usage and payment records may be generated by client software on each user device. The records may then be transmitted back to the central system for storage and analysis or the records may be generated and/or stored in an e-commerce web site. Alternatively, the information may be generated by seeding servers or tracker devices serving the client user devices and these server-side devices may forward the information to an administration component in the system.

A further feature of the client software may be a housekeeping functionality. Since the media data downloaded may only be accessible for a predetermined limited period of time, for example a television programme may be accessible only for 7 days after it was originally broadcast, downloaded files stored on a user's computer may become inaccessible sometime after download. Since the user cannot access or distribute the data, there is little point in the user storing the data on the user device. Hence a housekeeping function on the user device may delete such inaccessible data, preferably after checking with the user or informing the user, to free storage space on the user device.

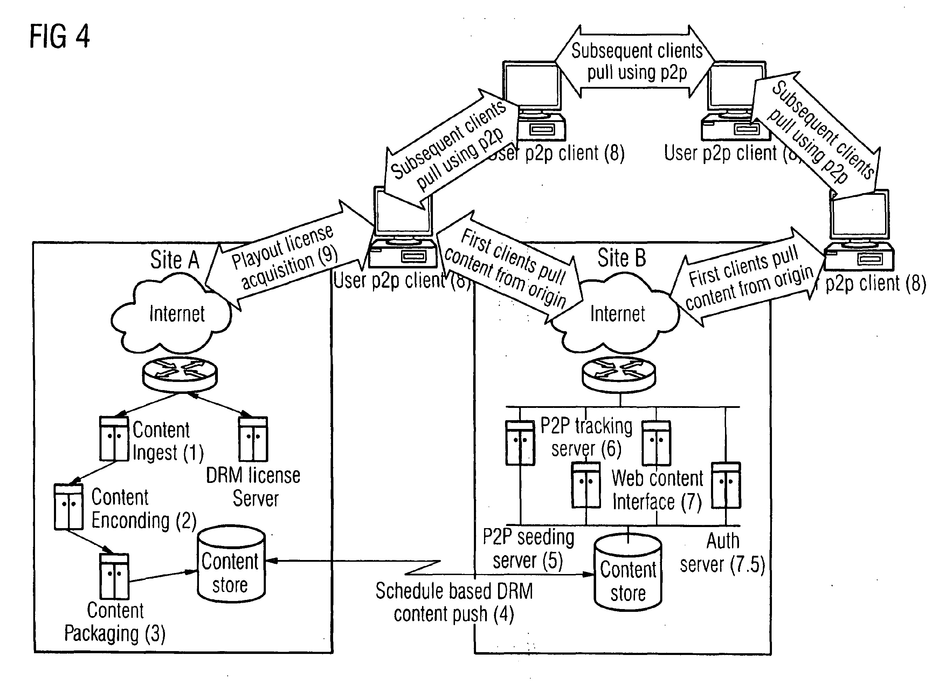

A further embodiment of the system described herein will now be described with reference to Fig. 4. In the system of Fig. 4, media data content is ingested 1, for example by FTP/SCP content ingest from the internet, encoded 2 and packaged 3 at a first location, Site A and is then published to a content server 4 at a separate site, Site B. The encoding 2 preferably comprises optional encoding from a source demo. The content packaging 3 may include DRM packaging (for example, to enable a 7-day playout window) and allocation of Storage Area Network (SAN) storage at Site A. The content store at Site B then seeds the content 5 to a seeding server, which enables access to the content by users via the internet. A tracking server 6 enables the system to monitor the distribution of content to users and a web content interface 7 may generate, store and allow users to access a content repository, for example an Electronic Programme Guide.

The system may further provide client software 8, for example a client interface, on the user devices. The user interface may include software to allow a user to access, for example to play back, the media content and may further incorporate Digital Rights Management client software. On receipt or playback of the media content, the system may further interface with a licence acquisition system 9 to ensure that users are correctly permitted and licensed to access and playback media content.

Site A and Site B may be physically located in the same place or may be separated over a large distance. The two sites are preferably connected over a high-bandwidth connection.

Modifications of the system described herein may be provided within the scope of the invention as set out in the claims and features of aspects of the invention may be applied to other aspects.

## Claims

1. A method of distributing rights-managed media data items to users, wherein each media data item has associated rights information, including a time-limited availability attribute, the method comprising, for each media data item:
in a seeding phase:
storing the media data item;
receiving requests for the media data item from a plurality of users;
determining the availability of the requested media data item based on the associated rights information;
transmitting the requested media data item to the plurality of users;
storing information identifying the media data item, the associated rights information for the media data item and a list of users who have received the media data item;
in a peer-to-peer phase:
receiving requests for the media data item from at least one further user;
compiling a list of sources of the media data item in a peer-to-peer network based on the list of users who have received the media data item;
determining the availability of the requested media data item based on the associated rights-information;
transmitting the list of sources to the at least one further user to enable the user to obtain the requested media data item via the peer-to-peer network;
storing information identifying the requested media data item, the at least one further user and the rights-information of the requested media data item; whereby the list of sources of the media data item is prioritised based on at least one of:
the estimated topographical distance of the source from the user in the network,
based on the respective Internet Protocol addresses of the source and the user; whereby the estimated topographical distance also takes account of bandwidth restrictions and/or reliability of availability of each source;
the network service provider of the user and the source;
the type and/or speed of connection of the source to the peer-to-peer network.

2. A method according to Claim 1 wherein the seeding phase comprises seeding the media data items from a central content server to seeding servers connected to the peer-to-peer network at a plurality of points.

3. A method according to Claim 1 or 2 wherein the seeding phase comprises seeding the media data items to users in the peer-to-peer network.

4. A method according to any of preceding claim further comprising deleting the media data item from the persistent store in the peer-to-peer phase.

5. A method according to any preceding claim wherein the step of storing information comprises storing information in a tracker device associated with the requesting user.

6. A method according to any preceding claim wherein the seeding phase comprises supplying the requested media data item to a predetermined number of users.

7. A method according to any preceding claim wherein the peer-to-peer phase further comprises the step of supplying the requested data directly to the user if the data is not readily available via the peer-to-peer network.

8. A method according to any preceding claim wherein the step of determining the availability of the requested media data item includes determining the availability based on the time-limited availability attribute for the media data item.

9. A method according to any preceding claim wherein the time-limited availability attribute is determined based on the time and/or the date of the release or broadcast of the media data item.

10. A method according to any preceding claim wherein providing the time-limited availability attribute comprises providing an attribute defining the number of times a user can access playback or copy the media data item.

11. A method according to any preceding claim wherein providing the list of sources of the media data item includes providing routing information for each source to enable the user to obtain the media data item from each source.

12. A method according to any preceding claim wherein providing the media data item comprises providing a plurality of chunks of media data.

13. A method according to Claim 12 wherein, in the seeding phase, the step of transmitting the media data item comprises transmitting each chunk of the media data item and wherein, in the peer-to-peer phase, compiling a list of sources of the media data item comprises compiling a list of sources of each chunk of the media data item.

14. A method according to Claim 12 or 13 wherein, for each chunk of media data, an associated hash value is calculated.

15. A method according to any of Claims 12 to 14 further comprising calculating a hash value for each chunk of media data and writing the hash values into a hash file for the media data item.

16. A method according to Claim 15 further comprising signing the hash file using a digital signature.

17. A method according to Claim 15 or 16 further comprising transmitting the hash file to the user or transmitting data to enable the user.

18. A method according to any preceding claim wherein the media data item comprises audio and/or video data.

19. A method according to any preceding claim wherein the user comprises a user device comprising at least one of:
a computer;
a personal digital assistant (PDA);
a mobile telephone handset;
a Wi-Fi device;
a set-top box;
a 3G device.

20. A method according to any preceding claim further comprising determining the type of the user device from which the request for a media data item is received.

21. A method according to Claim 20 further comprising selecting a format for the media data item based on the type of the user device determined.

22. A method according to any of Claims 1 to 19 further comprising receiving a user input to specify the type of user device and/or the requested download format.

23. A method according to any preceding claim wherein the step of determining the availability of the requested media item comprises determining the availability based on at least one of:
an estimate of the geographical location of the requesting user; the Internet Protocol (IP)
address of the requesting user;
an identifier of the requesting user;
attributes of the requesting user;
the type of the media data.

24. A method according to any preceding claim wherein providing the information stored identifying the user include providing:
the type of user device;
the type and/or speed of the collection from the user to the peer-to-peer network;
the format of the media data item transmitted to the user.

25. A method according to any preceding claim further comprising receiving and storing availability information from users in the peer-to-peer network, wherein the availability information indicates the availability of users to peer to other users in the network.

26. A method according to any preceding claim further comprising receiving additional data for the media data items stored by users in the network.

27. A method according to Claim 28 wherein providing the additional data includes at least one of providing:
an identifier of each media data item stored;
the time and/or date of download of the media data item by the user;
hash values for each chunk comprising the media data item;
the time and/or date of access by the user to the media data item.

28. A method according to any of Claims 23 to 27 wherein the user availability information and/or the additional data for the media data items is stored on a tracker device associated with the user.

29. A method according to Claim 28 wherein one tracker device receives and stores data from a plurality of users in a section of the peer-to-peer network.

30. A method according to Claim 28 or 29 wherein a plurality of interconnected tracker devices is used to receive and store data from the users in the peer-to-peer network.

31. A method according to any of Claims 28 to 30 wherein the or each tracker device maintains a source list for the media data items.

32. A method according to any preceding claim further comprising generating reporting data from the information received from the users.

33. A method according to Claim 33 wherein providing the reporting data comprises at least one of providing:
the number of download requests made by the user;
the proportion of time that the user is available for peering to other users;
the type of the user device of the user;
the type of the connection from the user to the peer-to-peer network;
the number of requests received for the download of each media data item; the number of
successful downloads performed for each media data item.

34. A method according to any preceding claim further comprising verifying the authenticity of media data items transmitted within the peer-to-peer network.

35. A method according to any preceding claim further comprising verifying the authenticity of media data items stored on user devices.

36. A method according to any preceding claim further comprising verifying the authenticity of media data items accessed by user devices.

37. A method according to any preceding claim wherein providing the media data item comprises providing a digitally signed chunk of data embedded in the header of the media data time.

38. A method according to Claim 37 wherein the authenticity of the media data item is verified based on the digitally signed chunk of data embedded in the header.

## Patentansprüche

1. Verfahren zum Verteilen von Mediendatenelementen mit Rechteverwaltung an Benutzer, wobei jedes Mediendatenelement zugehörige Rechteinformationen aufweist, einschließlich eines Attributs der zeitlich begrenzten Verfügbarkeit, wobei das Verfahren für jedes Mediendatenelement umfasst:
in einer Seeding-Phase:
Speichern des Mediendatenelements;
Empfangen von Anforderungen für das Mediendatenelement von einer Vielzahl von Benutzern;
Bestimmen der Verfügbarkeit des angeforderten Mediendatenelements auf der Grundlage der zugehörigen Rechteinformationen;
Übertragen des angeforderten Mediendatenelements zu der Vielzahl von Benutzern;
Speichern von Informationen, die das Mediendatenelement identifizieren, der zugehörigen Rechteinformationen für das Mediendatenelement und einer Liste von Benutzern, welche das Mediendatenelement empfangen haben;
in einer Peer-to-Peer-Phase:
Empfangen von Anforderungen für das Mediendatenelement von wenigstens einem weiteren Benutzer;
Erstellen einer Liste von Quellen des Mediendatenelements in einem Peer-to-Peer-Netzwerk auf der Grundlage der Liste von Benutzern, welche das Mediendatenelement empfangen haben; Bestimmen der Verfügbarkeit des angeforderten Mediendatenelements auf der Grundlage der zugehörigen Rechteinformationen;
Übertragen der Liste von Quellen zu dem wenigstens einen weiteren Benutzer, um dem Benutzer zu ermöglichen, das angeforderte Mediendatenelement über das Peer-to-Peer-Netzwerk zu beziehen;
Speichern von Informationen, welche das angeforderte Mediendatenelement, den wenigstens einen weiteren Benutzer und die Rechteinformationen des angeforderten Mediendatenelements identifizieren;
wobei die Liste von Quellen des Mediendatenelements auf der Grundlage wenigstens eines der folgenden Merkmale priorisiert ist:
der geschätzten topographischen Entfernung der Quelle von dem Benutzer in dem Netzwerk, auf der Grundlage der jeweiligen Internetprotokoll-Adressen der Quelle und des Benutzers; wobei die geschätzte topographische Entfernung auch Bandbreitebeschränkungen und/oder Zuverlässigkeit der Verfügbarkeit jeder Quelle berücksichtigt;
des Netzdiensteanbieters des Benutzers und der Quelle;
des Typs und/oder der Geschwindigkeit der Verbindung der Quelle mit dem Peer-to-Peer-Netzwerk.

2. Verfahren nach Anspruch 1, wobei die Seeding-Phase ein Seeding der Mediendatenelemente von einem zentralen Inhalteserver zu Seed-Servern, die mit dem Peer-to-Peer-Netzwerk an einer Vielzahl von Punkten verbunden sind, umfasst.

3. Verfahren nach Anspruch 1 oder 2, wobei die Seeding-Phase ein Seeding der Mediendatenelemente zu Benutzern in dem Peer-to-Peer-Netzwerk umfasst.

4. Verfahren nach einem der vorhergehenden Ansprüche, welches ferner das Löschen des Mediendatenelements aus dem nichtflüchtigen Speicher in der Peer-to-Peer-Phase umfasst.

5. Verfahren nach einem der vorhergehenden Ansprüche, wobei der Schritt des Speicherns von Informationen das Speichern von Informationen in einer Trackereinrichtung umfasst, die mit dem anfordernden Benutzer verknüpft ist.

6. Verfahren nach einem der vorhergehenden Ansprüche, wobei die Seeding-Phase das Liefern des angeforderten Mediendatenelements an eine vorbestimmte Anzahl von Benutzern umfasst.

7. Verfahren nach einem der vorhergehenden Ansprüche, wobei die Peer-to-Peer-Phase ferner den Schritt des Lieferns der angeforderten Daten direkt an den Benutzer umfasst, falls die Daten nicht ohne Weiteres über das Peer-to-Peer-Netzwerk verfügbar sind.

8. Verfahren nach einem der vorhergehenden Ansprüche, wobei der Schritt des Bestimmens der Verfügbarkeit des angeforderten Mediendatenelements das Bestimmen der Verfügbarkeit basierend auf dem Attribut der zeitlich begrenzten Verfügbarkeit für das Mediendatenelement beinhaltet.

9. Verfahren nach einem der vorhergehenden Ansprüche, wobei das Attribut der zeitlich begrenzten Verfügbarkeit auf der Grundlage des Zeitpunktes und/oder des Datums der Freigabe oder Ausstrahlung des Mediendatenelements bestimmt wird.

10. Verfahren nach einem der vorhergehenden Ansprüche, wobei das Vorsehen des Attributes der zeitlich begrenzten Verfügbarkeit das Vorsehen eines Attributes umfasst, das die Anzahl der Male definiert, die ein Benutzer auf das Mediendatenelement zugreifen, dieses abspielen oder kopieren kann.

11. Verfahren nach einem der vorhergehenden Ansprüche, wobei das Bereitstellen der Liste von Quellen des Mediendatenelements das Bereitstellen von Routing-Informationen für jede Quelle beinhaltet, um den Benutzer in die Lage zu versetzen, das Mediendatenelement von jeder Quelle zu erhalten.

12. Verfahren nach einem der vorhergehenden Ansprüche, wobei das Liefern des Mediendatenelements das Liefern einer Vielzahl von Chunks von Mediendaten umfasst.

13. Verfahren nach Anspruch 12, wobei in der Seeding-Phase der Schritt des Übertragens des Mediendatenelements das Übertragen jedes Chunks des Mediendatenelements umfasst, und wobei in der Peer-to-Peer-Phase das Erstellen einer Liste von Quellen des Mediendatenelements das Erstellen einer Liste von Quellen jedes Chunks des Mediendatenelements umfasst.

14. Verfahren nach Anspruch 12 oder 13, wobei für jeden Chunk von Mediendaten ein zugehöriger Hash-Wert berechnet wird.

15. Verfahren nach einem der Ansprüche 12 bis 14, welches ferner das Berechnen eines Hash-Wertes für jeden Chunk von Mediendaten und das Schreiben der Hash-Werte in eine Hash-Datei für das Mediendatenelement umfasst.

16. Verfahren nach Anspruch 15, welches ferner ein Signieren der Hash-Datei unter Verwendung einer digitalen Signatur umfasst.

17. Verfahren nach Anspruch 15 oder 16, welches ferner das Übertragen der Hash-Datei zu dem Benutzer oder das Übertragen von Daten, um den Benutzer in die Lage zu versetzen, umfasst.

18. Verfahren nach einem der vorhergehenden Ansprüche, wobei das Mediendatenelement Audiodaten und/oder Videodaten umfasst.

19. Verfahren nach einem der vorhergehenden Ansprüche, wobei der Benutzer eine Benutzereinrichtung umfasst, die wenigstens eines von Folgendem umfasst:
einen Computer;
einen persönlichen digitalen Assistenten (Personal Digital Assistant, PDA);
ein Mobiltelefon-Handgerät;
ein WiFi-Gerät;
eine Set-Top-Box;
ein 3G-Gerät.

20. Verfahren nach einem der vorhergehenden Ansprüche, welches ferner das Bestimmen des Typs der Benutzereinrichtung, von welcher die Anforderung für ein Mediendatenelement empfangen wird, umfasst.

21. Verfahren nach Anspruch 20, welches ferner das Auswählen eines Formats für das Mediendatenelement auf der Grundlage des bestimmten Typs der Benutzereinrichtung umfasst.

22. Verfahren nach einem der Ansprüche 1 bis 19, welches ferner das Empfangen einer Benutzereingabe umfasst, um den Typ der Benutzereinrichtung und/oder das angeforderte Downloadformat zu spezifizieren.

23. Verfahren nach einem der vorhergehenden Ansprüche, wobei der Schritt des Bestimmens der Verfügbarkeit des angeforderten Medienelements das Bestimmen der Verfügbarkeit auf der Grundlage wenigstens eines von folgenden Elementen umfasst:
einer Schätzung des geographischen Standortes des anfordernden Benutzers;
der Internetprotokoll- (IP-) Adresse des anfordernden Benutzers;
einer Kennung des anfordernden Benutzers;
von Attributen des anfordernden Benutzers;
des Typs der Mediendaten.

24. Verfahren nach einem der vorhergehenden Ansprüche, wobei das Bereitstellen der gespeicherten Informationen, die den Benutzer identifizieren, das Bereitstellen von Folgendem beinhaltet:
des Typs der Benutzereinrichtung;
des Typs und/oder der Geschwindigkeit der Verbindung von dem Benutzer zu dem Peer-to-Peer-Netzwerk;
des Formats des Mediendatenelements, das zu dem Benutzer übertragen wird.

25. Verfahren nach einem der vorhergehenden Ansprüche, welches ferner das Empfangen und Speichern von Verfügbarkeitsinformationen von Benutzern in dem Peer-to-Peer-Netzwerk umfasst, wobei die Verfügbarkeitsinformationen die Verfügbarkeit von Benutzern für ein Peering mit anderen Benutzern in dem Netzwerk anzeigen.

26. Verfahren nach einem der vorhergehenden Ansprüche, welches ferner das Empfangen zusätzlicher Daten zu den Mediendatenelementen, die von Benutzern in dem Netzwerk gespeichert sind, umfasst.

27. Verfahren nach Anspruch 28, wobei das Bereitstellen der zusätzlichen Daten das Bereitstellen wenigstens eines von Folgendem umfasst:
einer Kennung jedes gespeicherten Mediendatenelements;
der Uhrzeit und/oder des Datums des Herunterladens des Mediendatenelements durch den Benutzer;
von Hash-Werten für jeden Chunk, der Bestandteil des Mediendatenelements ist;
der Uhrzeit und/oder des Datums des Zugriffs auf das Mediendatenelement durch den Benutzer.

28. Verfahren nach einem der Ansprüche 23 bis 27, wobei die Benutzer-Verfügbarkeitsinformationen und/oder die zusätzlichen Daten für die Mediendatenelemente auf einer Trackereinrichtung gespeichert sind, die mit dem Benutzer verknüpft ist.

29. Verfahren nach Anspruch 28, wobei eine Trackereinrichtung Daten von einer Vielzahl von Benutzern in einer Sektion des Peer-to-Peer-Netzwerkes empfängt und speichert.

30. Verfahren nach Anspruch 28 oder 29, wobei eine Vielzahl von untereinander verbundenen Trackereinrichtungen verwendet wird, um Daten von den Benutzern in dem Peer-to-Peer-Netzwerk zu empfangen und zu speichern.

31. Verfahren nach einem der Ansprüche 28 bis 30, wobei die oder jede Trackereinrichtung eine Quellenliste für die Mediendatenelemente führt.

32. Verfahren nach einem der vorhergehenden Ansprüche, welches ferner das Erzeugen von Berichtsdaten aus den Informationen, die von den Benutzern empfangen wurden, umfasst.

33. Verfahren nach Anspruch 33, wobei das Bereitstellen der Berichtsdaten das Bereitstellen wenigstens eines von Folgendem umfasst:
der Anzahl von Download-Anforderungen, die durch den Benutzer erfolgt sind;
des Anteils der Zeit, in welcher der Benutzer für ein Peering mit anderen Benutzern verfügbar ist;
des Typs der Benutzereinrichtung des Benutzers;
des Typs der Verbindung von dem Benutzer zu dem Peer-to-Peer-Netzwerk;
der Anzahl der Anforderungen, die für das Herunterladen jedes Mediendatenelements empfangen wurden;
der Anzahl erfolgreicher Downloads, die für jedes Mediendatenelement durchgeführt wurden.

34. Verfahren nach einem der vorhergehenden Ansprüche, welches ferner das Überprüfen der Authentizität von Mediendatenelementen umfasst, die innerhalb des Peer-to-Peer-Netzwerkes übertragen werden.

35. Verfahren nach einem der vorhergehenden Ansprüche, welches ferner ein Überprüfen der Authentizität von Mediendatenelementen, die auf Benutzereinrichtungen gespeichert sind, umfasst.

36. Verfahren nach einem der vorhergehenden Ansprüche, welches ferner ein Überprüfen der Authentizität von Mediendatenelementen, auf welche von Benutzereinrichtungen zugegriffen wird, umfasst.

37. Verfahren nach einem der vorhergehenden Ansprüche, wobei das Bereitstellen des Mediendatenelements das Bereitstellen eines digital signierten Chunks von Daten umfasst, der in den Kopfteil des Mediendatenelements eingebettet ist.

38. Verfahren nach Anspruch 37, wobei die Authentizität des Mediendatenelements anhand des digital signierten Chunks von Daten überprüft wird, der in den Kopfteil eingebettet ist.

## Revendications

1. Procédé de distribution à des utilisateurs d'éléments de données multimédias à gestion de droits, dans lequel chaque élément de données multimédias comporte des informations sur les droits afférents, notamment un attribut de disponibilité limitée dans le temps, le procédé comprenant pour chaque élément de données multimédias les étapes consistant à :
au cours d'une phase d'ensemencement :
stocker l'élément de données multimédias ;
recevoir des demandes relatives à l'élément de données multimédias provenant d'une pluralité d'utilisateurs ;
déterminer la disponibilité de l'élément de données multimédias demandé sur la base des informations sur les droits afférents;
transmettre l'élément de données multimédias demandé à la pluralité d'utilisateurs ;
stocker les informations identifiant l'élément de données multimédias, les informations sur les droits afférents pour l'élément de données multimédias et une liste d'utilisateurs ayant reçu l'élément de données multimédias ;
au cours d'une phase de partage d'homologue à homologue:
recevoir des demandes relatives à l'élément de données multimédias provenant d'au moins un utilisateur supplémentaire ;
compiler une liste de sources de l'élément de données multimédias dans un réseau d'homologue à homologue sur la base de la liste d'utilisateurs ayant reçu l'élément de données multimédias ;
déterminer la disponibilité de l'élément de données multimédias demandé sur la base des informations sur les droits afférents;
transmettre la liste de sources au au moins un utilisateur supplémentaire pour permettre à l'utilisateur d'obtenir l'élément de données multimédias demandé via le réseau d'homologue à homologue ;
stocker les informations identifiant l'élément de données multimédias demandé, le au moins un utilisateur supplémentaire et les informations sur les droits de l'élément de données multimédias demandé ;
de sorte que la liste de sources de l'élément de données multimédias est classée par ordre de priorité sur la base d'au moins un élément parmi:
la distance topographique estimée de la source à partir de l'utilisateur dans le réseau, sur la base des adresses respectives de Protocole Internet de la source et de l'utilisateur ; de sorte que la distance topographique estimée tient également compte des limitations de la bande passante et/ou de la fiabilité de la disponibilité de chaque source;
le fournisseur d'accès au réseau de l'utilisateur et de la source ;
le type et/ou la vitesse de connexion de la source au réseau d'homologue à homologue.

2. Procédé selon la revendication 1, dans lequel la phase d'ensemencement comprend l'étape consistant à semer les éléments de données multimédias depuis un serveur central de contenu vers des serveurs semeurs connectés au réseau d'homologue à homologue en une pluralité de points.

3. Procédé selon la revendication 1 ou 2, dans lequel la phase d'ensemencement comprend l'étape consistant à semer les éléments de données multimédias vers des utilisateurs dans le réseau d'homologue à homologue.

4. Procédé selon une quelconque revendication précédente, comprenant en outre l'étape consistant à effacer l'élément de données multimédias de l'espace de stockage permanent au cours de la phase de partage d'homologue à homologue.

5. Procédé selon une quelconque revendication précédente, dans lequel l'étape consistant à stocker des informations comprend le stockage d'informations dans un dispositif pisteur associé à l'utilisateur demandeur.

6. Procédé selon une quelconque revendication précédente, dans lequel la phase d'ensemencement comprend l'étape consistant à délivrer l'élément de données multimédias demandé à un nombre prédéterminé d'utilisateurs.

7. Procédé selon une quelconque revendication précédente, dans lequel la phase de partage d'homologue à homologue comprend en outre l'étape consistant à délivrer les données demandées directement à l'utilisateur si les données ne sont pas aisément disponibles via le réseau d'homologue à homologue.

8. Procédé selon une quelconque revendication précédente, dans lequel l'étape consistant à déterminer la disponibilité de l'élément de données multimédias demandé comprend la détermination de la disponibilité sur la base de l'attribut de disponibilité limitée dans le temps relatif à l'élément de données multimédias.

9. Procédé selon une quelconque revendication précédente, dans lequel l'attribut de disponibilité limitée dans le temps est déterminé sur la base de l'heure et/ou de la date de l'émission ou de la diffusion de l'élément de données multimédias.

10. Procédé selon une quelconque revendication précédente, dans lequel l'étape consistant à attribuer l'attribut de disponibilité limitée dans le temps comprend l'attribution d'un attribut définissant le nombre de fois où un utilisateur peut accéder à l'élément de données multimédias, le reproduire ou le copier.

11. Procédé selon une quelconque revendication précédente, dans lequel l'étape consistant à établir la liste de sources de l'élément de données multimédias comprend l'établissement d'informations de routage pour chaque source de façon à permettre à l'utilisateur d'obtenir l'élément de données multimédias à partir de chaque source.

12. Procédé selon une quelconque revendication précédente, dans lequel l'étape consistant à transmettre l'élément de données multimédias comprend la transmission d'une pluralité de fragments de données multimédias.

13. Procédé selon la revendication 12, dans lequel, au cours de la phase d'ensemencement, l'étape consistant à transmettre l'élément de données multimédias comprend la transmission de chaque fragment de l'élément de données multimédias et dans lequel, au cours de la phase de partage d'homologue à homologue, l'étape consistant à compiler une liste de sources de l'élément de données multimédias comprend la compilation d'une liste de sources de chaque fragment de l'élément de données multimédias.

14. Procédé selon la revendication 12 ou 13, dans lequel il est calculé une valeur de hachage associée pour chaque fragment de données multimédias.

15. Procédé selon l'une quelconque des revendications 12 à 14, comprenant en outre les étapes consistant à calculer une valeur de hachage pour chaque fragment de données multimédias, puis à écrire les valeurs de hachage dans un fichier de hachage pour l'élément de données multimédias.

16. Procédé selon la revendication 15, comprenant en outre l'étape consistant à signer le fichier de hachage au moyen d'une signature numérique.

17. Procédé selon la revendication 15 ou 16, comprenant en outre l'étape consistant à transmettre le fichier de hachage à l'utilisateur ou à transmettre les données permettant d'autoriser l'utilisateur.

18. Procédé selon une quelconque revendication précédente, dans lequel l'élément de données multimédias comprend des données audio et/ou vidéo.

19. Procédé selon une quelconque revendication précédente, dans lequel l'utilisateur dispose d'un dispositif d'utilisateur comprenant au moins un élément parmi :
un ordinateur ;
un assistant numérique personnel (PDA) ;
un téléphone mobile ;
un dispositif Wi-Fi ;
un boîtier décodeur;
un dispositif 3G.

20. Procédé selon une quelconque revendication précédente, comprenant en outre l'étape consistant à déterminer le type du dispositif d'utilisateur à partir duquel la demande relative à un élément de données multimédias est reçue.

21. Procédé selon la revendication 20, comprenant en outre l'étape consistant à sélectionner un format pour l'élément de données multimédias sur la base du type du dispositif d'utilisateur déterminé.

22. Procédé selon l'une quelconque des revendications 1 à 19, comprenant en outre l'étape consistant à recevoir une entrée d'utilisateur visant à spécifier le type de dispositif d'utilisateur et/ou le format de téléchargement demandé.

23. Procédé selon une quelconque revendication précédente, dans lequel l'étape consistant à déterminer la disponibilité de l'élément de données multimédias demandé comprend la détermination de la disponibilité sur la base d'au moins un élément parmi:
une estimation de la localisation géographique de l'utilisateur demandeur ;
l'adresse de Protocole Internet (IP) de l'utilisateur demandeur ;
un identifiant de l'utilisateur demandeur;
des attributs de l'utilisateur demandeur;
le type des données multimédias.

24. Procédé selon une quelconque revendication précédente, dans lequel l'étape consistant à transmettre les informations stockées identifiant l'utilisateur comprend la transmission
du type de dispositif d'utilisateur ;
du type et/ou de la vitesse de la connexion de l'utilisateur au réseau d'homologue à homologue ;
du format de l'élément de données multimédias transmis à l'utilisateur.

25. Procédé selon une quelconque revendication précédente, comprenant en outre les étapes consistant à recevoir et à stocker les informations de disponibilité provenant des utilisateurs dans le réseau d'homologue à homologue, dans lesquelles les informations de disponibilité indiquent la disponibilité des utilisateurs pour échanger avec d'autres utilisateurs dans le réseau.

26. Procédé selon une quelconque revendication précédente, comprenant en outre l'étape consistant à recevoir des données supplémentaires relatives aux éléments de données multimédias stockés par les utilisateurs dans le réseau.

27. Procédé selon la revendication 26, dans lequel l'étape consistant à recevoir les données supplémentaires comprend la réception d'au moins un élément parmi:
un identifiant de chaque élément de données multimédias stocké ;
l'heure et/ou la date de téléchargement de l'élément de données multimédias par l'utilisateur ;
les valeurs de hachage pour chaque fragment constituant l'élément de données multimédias ;
l'heure et/ou la date d'accès à l'élément de données multimédias par l'utilisateur.

28. Procédé selon l'une quelconque des revendications 23 à 27, dans lequel les informations sur la disponibilité des utilisateurs et/ou les données supplémentaires relatives aux éléments de données multimédias sont stockées dans un dispositif pisteur associé à l'utilisateur.

29. Procédé selon la revendication 28, dans lequel un dispositif pisteur reçoit et stocke les données provenant d'une pluralité d'utilisateurs dans une section du réseau d'homologue à homologue.

30. Procédé selon la revendication 28 ou 29, dans lequel il est utilisé une pluralité de dispositifs pisteurs interconnectés pour recevoir et stocker les données provenant des utilisateurs dans le réseau d'homologue à homologue.

31. Procédé selon l'une quelconque des revendications 28 à 30, dans lequel le, ou chaque, dispositif pisteur tient une liste de sources relative aux éléments de données multimédias.

32. Procédé selon une quelconque revendication précédente, comprenant en outre l'étape consistant à générer des données de compte rendu à partir des informations reçues des utilisateurs.

33. Procédé selon la revendication 32, dans lequel l'étape consistant à générer les données de compte rendu comprend la génération d'au moins un élément parmi :
le nombre de demandes de téléchargement formulées par l'utilisateur ;
la proportion de temps pendant laquelle l'utilisateur est disponible pour échanger avec d'autres utilisateurs ;
le type du dispositif d'utilisateur de l'utilisateur;
le type de la connexion de l'utilisateur au réseau d'homologue à homologue ;
le nombre de demandes reçues pour le téléchargement de chaque élément de données multimédias ;
le nombre de téléchargements réussis exécutés pour chaque élément de données multimédias.

34. Procédé selon une quelconque revendication précédente, comprenant en outre l'étape consistant à vérifier l'authenticité des éléments de données multimédias transmis à l'intérieur du réseau d'homologue à homologue.

35. Procédé selon une quelconque revendication précédente, comprenant en outre l'étape consistant à vérifier l'authenticité des éléments de données multimédias stockés dans les dispositifs d'utilisateur.

36. Procédé selon une quelconque revendication précédente, comprenant en outre l'étape consistant à vérifier l'authenticité des éléments de données multimédias auxquels accèdent les dispositifs d'utilisateur.

37. Procédé selon une quelconque revendication précédente, dans lequel l'étape consistant à transmettre l'élément de données multimédias comprend la transmission d'un fragment de données signé numériquement incorporé dans l'en-tête de l'élément de données multimédias.

38. Procédé selon la revendication 37, dans lequel l'authenticité de l'élément de données multimédias est vérifiée sur la base du fragment de données signé numériquement incorporé dans l'en-tête.
